# EUROPÄISCHE PATENTANMELDUNG

(11) **EP 4 830 564 A1**
(43) Veröffentlichungstag der Anmeldung: **28.10.2026**
(21) Anmeldenummer: 25171619.7
(22) Anmeldetag: 22.04.2025
(51) Int. Cl.: A43B 7/14, A43D 111/00, A43D 999/00, B29C 64/118, B29C 64/236, B29C 64/245, B33Y 10/00, B33Y 80/00

(54) **VERFAHREN ZUM HERSTELLEN EINES BAUTEILS FÜR EINE ORTHOPÄDISCHE SCHUHEINLAGE, ORTHOPÄDISCH WIRKSAMES BAUTEIL HERGESTELLT NACH DEM VERFAHREN, SOWIE ORTHOPÄDISCHE SCHUHEINLAGE AUFWEISEND DAS BAUTEIL SOWIE KUNSTSTOFFMATERIAL-MISCHUNG ZUM HERSTELLEN DES ORTHOPÄDISCH WIRKSAMEN BAUTEILS**

(71) Anmelder: Spannrit GmbH, 63801 Kleinostheim (DE)
(72) Erfinder: KATZER, Roland, 63801 Kleinostheim (DE)
(74) Vertreter: Kuhnen & Wacker Patent- und Rechtsanwaltsbüro PartG mbB

(57) **Zusammenfassung**

Die Erfindung betrifft ein Verfahren zum Herstellen eines orthopädisch wirksamen Bauteils für eine orthopädische Schuheinlage aus einem aufgeschäumten thermoplastischen Kunststoff-Material mittels FDM-3D-Druckverfahren, aufweisend die Schritte:
- physikalisches Mischen (S 200) eines Granulates aufweisend Granulatkörner eines thermoplastischen Kunststoff-Materials mit einem Treibmittel zum Erzeugen einer Materialmischung;
- Bereitstellen (S 300) der Materialmischung in einem insbesondere trichterförmigen Vorratsbehälter eines FDM-3D-Druckers;
- Fördern (S 400) der Materialmischung aus dem Vorratsbehälter zu einer Austrittsdüse des FDM-3D-Druckers mittels einer Fördereinrichtung;
- Erhitzen (S 450) der Materialmischung bis über eine Schmelztemperatur des Kunststoffmaterials;
- Durchdrücken (S 500) der Materialmischung durch die Austrittsdüse zum Erzeugen eines aus der Materialmischung entstehenden aufgeschmolzenen und aufgeschäumten, faden- oder bandförmigen Extrudatstranges;
- wiederholtes schichtbildendes Auftragen oder Ablegen (S 600) des Extrudatstranges in Schwerkraftrichtung auf ein getaktet angetriebenes Förderband, zum Beispiel ein Endlosförderband, und/oder auf einen bereits aufgetragenen Extrudatstrang, diesen in Schwerkraftrichtung gesehen wenigstens teilweise überlappend mittels einer Materialauftragvorrichtung.

Die Erfindung betrifft auch ein so hergestelltes orthopädisch wirksames Bauteil und eine orthopädische Schuheinlage mit dem orthopädisch wirksamen Bauteil sowie eine Kunststoffmaterial-Mischung zum Herstellen des orthopädisch wirksamen Bauteils.

## Beschreibung

Die Erfindung betrifft ein Verfahren zum Herstellen eines Bauteils für eine orthopädische Schuheinlage aus einem aufgeschäumten thermoplastischen Kunststoffmaterial mittels FDM (Fused Deposition Modeling)-3D-Druckverfahren sowie ein Bauteil hergestellt nach dem Verfahren, eine orthopädische Schuheinlage aufweisend das Bauteil sowie Kunststoffmaterial-Mischung zum Herstellen des orthopädisch wirksamen Bauteils.

Das FDM-3D-Druckverfahren stellt ein additives Herstellverfahren dar und ist im Wesentlichen dadurch gekennzeichnet, dass mittels eines Extruders ein Werkstoff in Form eines Filaments durch eine beheizte Düse geführt wird, dort aufgeschmolzen und auf eine Unterlage bzw. eine bereits vorher aufgetragene Schicht oder einen vorher aufgetragenes Filament ablegt wird. Nach dem Ablegen und Abkühlen erstarrt der Werkstoff wieder. Beim Ablegen eines noch geschmolzenen Filaments auf einen bereits vorher abgelegten Filamentstrang findet durch den Wärmeeintrag des geschmolzenen Filaments auf ein bereits vorhandenen darunterliegenden Filamentstrang ein geringfügiges erneutes Anschmelzen des darunterliegenden Filamentstrangs statt, sodass sich aufeinandergelegte Filamentstränge stoffschlüssig miteinander verbinden. Durch mehrmaliges Aufeinanderlegen von Filamenten werden schichtweise dreidimensionale Körper erstellt. Übliche Werkstoffe für ein solches 3D-Druckverfahren mit aufgeschmolzenen Filamenten sind insbesondere thermoplastische Kunststoffe, wie zum Beispiel PLA, ABS, ASA, PA, PC, PP, PE TG aber auch thermoplastische Elastomere, wie zum Beispiel TPU.

Mit diesen bekannten 3D Druckverfahren, ist es ohne weiteres möglich, komplizierte räumliche Geometrien, Hohlkörper oder überkragende Bauteile gegebenenfalls unter Zuhilfenahme von Stützstrukturen herzustellen. Auch können sehr fein verästelte Strukturen gedruckt werden, wodurch eine besonders leichte Ausbildung des zu druckenden Körpers möglich ist. Auch bei besonders fein strukturierten verästelten Bauteilkonstruktionen ist jedoch bei den bekannten FDM-3D-Druckverfahren jedes Filament für sich betrachtet aus einem massiven Material gebildet.

Aufgabe der Erfindung ist es daher, ein Verfahren zum Herstellen eines Bauteils für eine orthopädische Schuheinlage anzugeben, welches aus einem aufgeschäumten, also nicht massivem thermoplastischen Kunststoffmaterial mittels eines FDM-3D-Druckverfahrens hergestellt ist.

Ziel ist es, aus einem 3D-Datenmodell, zum Beispiel eines patientenindividuellen Fußabdruckes, ein besonders leichtes, biegsames, elastisches und doch stützendes und tragendes, orthopädisch wirksames Bauteil herzustellen, welches zur weiteren Ausbildung von orthopädischen Schuheinlagen geeignet ist. Dieses Bauteil soll ohne Formwerkzeuge ausschließlich im 3D-Druck in geschäumtem Aufbau herstellbar sein. Insbesondere soll ein geeigneter Rohling geschaffen werden, welcher im Bedarfsfall durch einen Orthopädie-Schuhmachermeister an den Fuß eines Patienten mittels Schleifen/Fräsen oder dergleichen handwerklichen Verfahren final bzw. individuell angepasst werden kann.

Des Weiteren soll ein Verfahren angegeben werden, welches unabhängig von gängigen Filament-Durchmessern von für den 3D Druck vorgesehenen Werkstoff-Filamenten anwendbar ist.

Hinsichtlich des zu schaffenden Bauteils hat sich die Erfindung die Aufgabe gestellt, ein geschäumtes Bauteil im 3D-Druckverfahren herstellen zu können, welches die oben erwähnten Anforderungen an orthopädische Wirksamkeit, Stabilität, geringem Gewicht, Biegsamkeit und Elastizität erfüllt.

Außerdem ist es Aufgabe der Erfindung eine orthopädische Schuhsohle anzugeben, welche das erfindungsgemäße Bauteil nutzt.

Schließlich soll eine geeignete Kunststoffmaterialmischung zum Herstellen des orthopädisch wirksamen Bauteils angegeben werden.

Diese Aufgaben werden hinsichtlich des Herstellungsverfahrens erfindungsgemäß mit einem Verfahren zum Herstellen eines Bauteils für eine orthopädische Schuheinlage aus einem aufgeschäumten thermoplastischen Kunststoff-Material mittels FDM-3D-Druckverfahren gelöst, welches nachfolgende Schritte aufweist:
- physikalisches Mischen eines Granulates aufweisend Granulatkörner eines thermoplastischen Kunststoff-Materials mit einem Treibmittel zum Erzeugen einer Materialmischung;
- Bereitstellen der Materialmischung in einem insbesondere trichterförmigen Vorratsbehälter eines FDM-3D-Druckers;
- Fördern der Materialmischung aus dem Vorratsbehälter zu einer Austrittsdüse eines FDM-3D-Druckers mittels einer Fördereinrichtung;
- Erhitzen der Materialmischung, gegebenenfalls bereits teilweise während des Förderns, bis über eine Schmelztemperatur des Kunststoffmaterials;
- Durchdrücken der Materialmischung durch die Austrittsdüse zum Erzeugen eines aus der Materialmischung entstehenden aufgeschmolzenen und aufgeschäumten, faden- oder bandförmigen Extrudatstranges;
- wiederholtes schichtbildendes Auftragen oder Ablegen des Extrudatstranges in Schwerkraftrichtung mittels einer Materialauftragvorrichtung auf ein getaktet angetriebenes Förderband, zum Beispiel ein Endlosförderband, und/oder auf einen bereits auf dem Förderband befindlichen, aufgetragenen Extrudatstrang diesen, in Schwerkraftrichtung gesehen wenigstens teilweise überlappend.

Erfindungsgemäß wurde erkannt, dass ein aufschäumbares Kunststoffmaterial in Form eines Filaments, welches das übliche FDM-3D-Druckverfahren nutzt, nicht existiert bzw. auf dem Markt nicht zur Verfügung steht. Ein solches bereitzustellen - sofern technisch möglich - erfordert enormen Entwicklungsaufwand, was ein solches Filament unverhältnismäßig teuer und aufwendig machen würde.

In Abwandlung des gängigen FDM-3D-Druck Verfahrens arbeitet das erfindungsgemäße Verfahren mit einem Werkstoff, welcher nicht als Filament bevorratet wird. Vielmehr nutzt die Erfindung ein thermoplastisches Kunststoff-Material, welches in Form eines Granulates vorliegt, welches aus einer Vielzahl von Granulatkörnern besteht. Unter Granulatkörner sind erfindungsgemäß kleinteilige Stückchen des thermoplastischen Kunststoff-Materials zu verstehen, welche im Gegensatz zu einem Filament nicht einen lang gestreckten zylindrischen oder anderweitig querschnittsgeformten Körper bilden. Die Granulatkörner bilden ein Schüttgut und können zum Beispiel quaderförmig, kugelförmig, zylinderförmig oder unregelmäßig geformt sein. Sie weisen beispielsweise jeweils ein Volumen von weniger als 1 cm³, insbesondere weniger als 0,5 cm³ auf.

Weiterhin nutzt das erfindungsgemäße Verfahren ein Treibmittel zum Aufschäumen des eingesetzten Kunststoffs. Dabei besitzt das Treibmittel eine Aktivierungstemperatur, ab der aus dem Treibmittel gasförmige Produkte entstehen, die, wenn sie sich in einer Kunststoffschmelze befinden, zu einem Aufschäumen der Kunststoffschmelze führen. Derartige Treibmittel sind auch als Schaumbildner bekannt. Solche Treibmittel liegen beispielsweise in Pulverform vor.

Die Erfindung sieht vor, vor dem Verarbeiten des Kunststoffwerkstoffes im Wege des 3D-Druckes einen aufschäumbaren Kunststoff bereitzustellen. Dies gelingt durch die Bereitstellung des oben erwähnten Kunststoffgranulats, welches mit einem geeigneten, z.B. pulverförmigen, Treibmittel physikalisch vermischt wird, sodass eine Materialmischung aus Granulatkörnern des Kunststoffgranulats und dem Treibmittel, welches nach Aktivierung desselben geeignet ist, die Kunststoffschmelze aufschäumen zu können, bereitgestellt wird. Hierbei wir wird insbesondere erreicht, dass das Treibmittel an der/den Außenflächen der Granulatkörner anhaftet und so bei einem Erwärmen in ausreichendem Maße in der Materialmischung vorhanden ist sowie schneller seine Aktivierungstemperatur erreicht. Weiter wird damit erreicht, dass das Kunststoff-Material der Granulatkörner, sobald dieses seine Schmelztemperatur erreicht, durch das Treibmittel aufgeschäumt wird. Bevorzugt ist die Aktivierungstemperatur des Treibmittels niedriger als die Schmelztemperatur des Kunststoffmaterials, so dass bereits vor dem Erreichen der Schmelztemperatur des Kunststoffmaterials gasförmiges Treibmittel vorliegt, welches unmittelbar nach Erreichen der Schmelztemperatur des Kunststoffmaterials dieses aufschäumen kann.

Die Materialmischung aus Kunststoff-Granulatkörnern und nicht aktiviertem Treibmittel wird einem geeigneten, zum Beispiel trichterförmigen Vorratsbehälter eines FDM-3D-Druckers zugeführt. Von diesem Vorratsbehälter wird die bereitgestellte Materialmischung weiter einer Austrittsdüse eines Druckkopfes des FDM-Druckers mittels einer Fördereinrichtung zugeführt. Dies kann beispielsweise mittels geeigneten beheizbaren Schneckenförderern geschehen, wobei die Materialmischung längs ihres Förderweges kontinuierlich erhitzt wird, bis spätestens an der Austrittsdüse die Schmelztemperatur des Kunststoffs vorliegt. Innerhalb dieser Fördereinrichtung des FDM-3D-Druckers, zum Beispiel innerhalb eines Schneckenförderers, wird somit sowohl das Treibmittel aktiviert als auch das Kunststoffgranulat aufgeschmolzen, wodurch bereits im Bereich der Austrittsdüse ein Aufschäumen des Kunststoffes zumindest initiiert wird. Das Aufschäumen der Kunststoffschmelze erfolgt bevorzugt beim Austritt der Kunststoff-Treibmittelschmelze aus der Austrittsdüse in die Umgebung, da bei diesem Übergang des Materialstroms von einem Bereich mit Überdruck innerhalb der Fördereinrichtung (aufgrund des bereits aktivierten Treibmittels) in einem Bereich mit Umgebungsdruck außerhalb der Austrittsdüse das Treibgas, welches aus dem Treibmittel entstanden ist, in der Kunststoffschmelze expandieren kann und so am Ausgang der Austrittsdüse ein aufgeschäumter, faden- oder bandförmiger Extrudatstrang aus der ursprünglich eingesetzten Materialmischung entsteht.

Damit ein unbeabsichtigtes Entweichen des gasförmigen Treibmittels aus der Fördereinrichtung vor dem Erreichen der Schmelztemperatur verhindert wird, können geeignete fachübliche Maßnahmen ergriffen werden, wie zum Beispiel:

Die Verwendung einer Plastifizierschnecke bzw. eines Plastifizierextruders, ähnlichen solchen, die aus dem Spritzguss- oder Extrudierprozess bekannt sind und die eine interne oder externe Heizung zum Erwärmen der zu fördernden und aufzuschmelzenden Materialmischung aufweisen. Üblicherweise weisen solche Plastifizierer eine gute Abdichtung der Förderschnecke gegenüber dem Förderrohr auf, sodass ein entstehender Überdruck in der Födereinrichtung verbleibt und am Ende der Förderstrecke nutzbringend eingesetzt werden kann. In der vorliegenden Erfindung wird das Treibmittel aktiviert, bevor die Granulatkörner des Kunststoffmaterials schmelzen. Dabei geht das Treibmittel in den gasförmigen Zustand über und bildet in der Fördereinrichtung / im Förderrohr einen Überdruck, der dazu verwendet werden kann, dass die Materialmischung weiter transportiert bzw. zumindest ihr Weitertransport unterstützt wird, sodass die plastifizierte Materialmischung am Förderende durch eine Austrittsdüse hindurchgedrückt wird, wo sie nach Verlassen der Austrittsdüse aufschäumt, da dort Umgebungsdruck vorherrscht.

In einem Ausführungsbeispiel der Erfindung kann es bevorzugt sein, einen Schneckenförderer oder eine Plastifizierschnecke der Fördereinrichtung in etwa vertikal auszurichten, wobei der Ausgang der aufgeschmolzenen Materialmischung am unteren Ende angeordnet ist, und somit der Födereinlass am oberen Ende. Hier lässt sich eine verbesserte Abdichtung der Schneckengänge gegenüber dem Förderrohr erzielen, da das noch nicht oder nicht vollständig aufgeschmolzene Kunststoffgranulat, das teilweise in breiigen Zustand vorliegt, aufgrund der Schwerkraft des darüberliegenden Materials hilft die Schneckenwindungen zum Förderrohr hin abzudichten und so eine Art selbsthemmende Abdichtung zwischen Innenwand des Förderrohrs und Außenflächen der Förderschnecke bereitstellt, und so verhindert, dass der entstehende Druck in der Fördereinrichtung in Richtung des Einlass der Fördereinrichtung entweicht. Dies macht ggfs. zusätzliche Abdichtmaßnahmen zur Vermeidung, dass gasförmiges Treibmittel aus den Extruder in Richtung Extrudereingang entweicht, überflüssig. Damit kann mit einer vertikalen oder in etwa vertikalen Ausrichtung der Fördereinrichtung eine Art Selbstabdichtungseffekt erzielt werden, welcher bei einer horizontalen Ausrichtung der Förderschnecke der Fördereinrichtung nur in einem geringeren Maße auftritt. Gegebenenfalls können so zusätzliche Maßnahmen zum Erreichen einer verbesserten Gasdichtigkeit der Fördereinrichtung in Richtung des Einlass der Fördereinrichtung vermieden werden.

Ein so aufgeschmolzener bzw. angeschmolzener und wenigstens teilweise bereits aufgeschäumter Werkstoff wird gemäß des erfindungsgemäßen Verfahrens durch die Austrittsdüse, zum Beispiel einen beheizten Düsenkanal der gegebenenfalls beheizten Austrittsdüse hindurchgedrückt, sodass sich am Ende des beheizten Düsenkanals der Austrittsdüse ein strangförmiger, zum Beispiel faden -oder bandförmiger Werkstoff- bzw. Extrudatstrang aus geschmolzenem und wenigstens teilweise aufgeschäumtem Kunststoffmaterial bildet. Die Querschnittsform des Werkstoffstranges, im folgenden Extrudatstrang genannt, ist dabei grundsätzlich beliebig wählbar. In einfachster Form stellt die Düse einen im Querschnitt näherungsweise kreisförmigen Extrudatstrang zur Verfügung. Dabei wird der Vorschub des Extrudatstrangs durch die Austrittsdüse durch den Extruder selbst, dem Überdruck im Extruder, durch die Expansion am Düsenausgang und/oder die Schwerkraft bewirkt, bzw. kann durch Beeinflussung von Extruderparametern, wie Durchmesser, Schneckensteigung, Drehzahl, Temperaturprofil, etc. geeignet eingestellt werden, sodass ein noch warmer Extrudatstrang sich mit einem bereits abgelegten Extrudatstrang stoffschlüssig verbinden kann.

Dieser aufgeschmolzene und aufgeschäumte Extrudatstrang wird in bekannter Art und Weise, wie aus dem FDM-3D-Druckverfahren bekannt, entweder auf eine Unterlage, welche das entstehende Bauteil während des Druckes trägt oder auf einen bereits in einem früheren Durchgang abgelegten Extrudatstrang, diesen wenigstens teilweise überlappend, abgelegt. Die Unterlage, welche bei üblichem FDM-3D-Druckverfahren oftmals eine starre Platte ist, ist erfindungsgemäß abgewandelt und durch ein in einer Fördererrichtung getaktet antreibbares Förderband, zum Beispiel ein Endlosförderband ersetzt. Die Fördererrichtung des Förderbandes kann dabei einer der Raumachsen (X-Achse, Y-Achse, Z-Achse) entsprechen und bildet insbesondere die Z-Achse, z.B. die Längsrichtung des herzustellenden Bauteils. Eine Größe des Taktschrittes des getakteten Förderbandes entspricht beispielsweise einer Dicke eines aufzutragenden neuen Extrudatstrangs auf einem bereits existierenden Extrudatstrang. Der Druckkopf, welcher die Austrittsdüse trägt, führt in bekannter Art und Weise Positionierbewegungen in der X- und Y-Richtung aus. Der Druckkopf bildet somit eine Materialauftragsvorrichtung für das strangförmig die Austrittsdüse verlassende, aufgeschmolzene, aufgeschäumte Kunststoffmaterial.

In einer weiter bevorzugten Ausführungsform des erfindungsgemäßen Verfahrens ist das Förderband, zum Beispiel ein Endlosförderband gegenüber der Horizontalen geneigt.

Durch eine geneigte Anordnung des Förderbandes gegenüber der Horizontalen wird erreicht, dass ein in Schwerkraftrichtung auf die Unterlage auftreffender Extrudatstrang - hier das Förderband oder ein auf einem auf dem geneigten Förderband bereits vorhandener, früher abgelegter Extrudatstrang - einerseits auf dem Förderband und/ oder andererseits auf dem bereits vorhandenen, darunterliegenden Extrudatstrang Halt findet. Außerdem ermöglicht die Schrägstellung des Förderbandes das Bauteil-Herstellverfahren kontinuierlich durchzuführen, da das entstehende Bauteil in Fördererrichtung des Förderbandes relativ zum Druckkopf des 3D Druckers bewegt wird und nach Fertigstellung eines Bauteils aus dem Arbeitsbereich des Druckkopfes des 3D Druckers, z.B. nach unten wegbewegt wird. Der Druckkopf kann sofort nach Fertigstellung eines Bauteils an einer freien Stelle des Förderbandes mit dem Druck des nächsten Bauteiles beginnen, ohne dass zunächst das gerade fertig gestellte Bauteil vom Förderband entfernt werden muss.

Ein weiterer Vorteil ist, dass insbesondere bei der Herstellung von dünnwandigen Bauteilen die Schrägstellung des Förderbandes einen vergrößerten Überlappungsbereich einer Schicht des Extrudatstrang gegenüber der vorausgegangenen Schicht des Extrudatstrangs bewirkt, und somit eine festere und mechanische beanspruchungsbare Verbindung zwischen den Schichten entsteht.

Als Schrägstellung des Förderband gegenüber der Horizontalen hat sich ein Winkel von 30° bis 70°, insbesondere ein Winkel im Bereich von 40° bis 60° besonders bewährt.

In einer bevorzugten Ausführungsform des erfindungsgemäßen Verfahrens werden die Oberflächen der Granulatkörner des thermoplastischen Kunststoff-Materials mechanisch aufgeraut, bevor diese mit dem zum Beispiel pulverförmigen Treibmittel vermischt werden.

Mit dieser Maßnahme gelingt es, ein verbessertes Anhaften des Treibmittels an Oberflächen der Granulatkörnern sicherzustellen und/oder eine gleichmäßigere Vermischung zwischen den Granulatkörnern und dem Treibmittel zu erreichen, und die stabiler bis zu Weiterverarbeitung/Erwärmung der Materialmischung erhalten bleibt. Hierdurch wird sichergestellt, dass das Treibmittel nicht nur besser an den Oberflächen der Granulatkörnern anhaften bleibt, bis die Materialmischung zum Zwecke des Aufschäumens erhitzt wird, sondern auch dass größere Mengen eines beispielsweise pulverförmigen Treibmittels an der einzelnen Granulatkörner anhaftet.

Mit der Erfindung gelingt es, nur unter geringer Abwandlung des FDM-3D-Druckverfahrens eine Möglichkeit zu schaffen, ein Bauteil aus aufgeschäumten Kunststoff herzustellen, ohne dass ein aufwendig und teuer herzustellendes aufschäumbares Filament notwendig ist.

Erfindungsgemäß sind weitere mögliche Maßnahmen denkbar, die die quantitative und/oder qualitative Anhaftung des Treibmittels an das Kunststoffgranulat verbessern, wie statische Aufladung der Granulatkörner, Anfeuchten des Granulats oder des Treibmittels, Anwärmen des Treibmittels unterhalb der Aktivierungstemperatur, um einen klebrigeren Zustand zu erreichen, Verwenden eines flüssigen Treibmittels, etc. Hier wird ein Fachmann weitere fachübliche Möglichkeiten erkennen, wie eine verbesserte Anhaftung des Treibmittels an das Granulat erreicht werden kann, ohne vom Grundgedanken der Erfindung abzuweichen, ein mit Treibmittel vermischtes Kunststoffgranulat zum Herstellen eines orthopädisch wirksamen Bauteils im FDM-3D-Druckverfahren zu verwenden.

Bevorzugt ist die Aktivierungstemperatur des Treibmittels geringer als die Schmelztemperatur des verwendeten thermoplastischen Kunststoff-Materials, sodass das geschmolzene Kunststoffmaterial beim Austritt aus der Austrittsdüse aufgeschäumt wird.

Dies wird erfindungsgemäß dadurch erreicht, dass das Treibmittel an den äußeren Oberflächen der Granulatkörner des thermoplastischen Kunststoffmaterials anhaftet und innerhalb der Fördereinrichtung, zum Beispiel durch Knet- und Walkvorgänge einer Schnecke eines Schneckenförderers oder mittels entsprechender Heizeinrichtungen, welche die Fördereinrichtung beheizen, direkt und zusammen mit dem Kunststoff erwärmt wird. Mit Fortschreiten der Temperaturerhöhung der Granulatkörner kann der thermoplastische bzw. thermoelastische Kunststoff unverzüglich nach Erreichen der Schmelztemperatur aufschäumen, weil das Treibmittel dann schon seine Aktivierungstemperatur überschritten hat und als gasförmiges Treibgas vorliegt. Die Schmelze verlässt die Austrittsdüse in einen Bereich mit Umgebungsdruck als erfindungsgemäßer Extrudatstrang aus aufgeschäumten Kunststoff.

Innerhalb der Fördereinrichtung bewirkt die Aktivierung des Treibmittels bei einer gegenüber der Schmelztemperatur des Kunststoffmaterials niedrigeren Aktivierungstemperatur einen Überdruck innerhalb der Fördereinrichtung, welcher die aufgeschmolzene und aktivierte Materialmischung nach Erreichen der Schmelztemperatur des Kunststoffmaterials im Düsenkanal zum Düsenausgang der Austrittsdüse drängt, wobei diese entlang eines zum Düsenaustritt hin abnehmenden Druckgradienten zu expandieren beginnt und unter Umgebungsdruck weiter expandieren kann. Diese weitere Expansion der Materialmischung nach Verlassen der Austrittsdüse kann beispielsweise bei der Ablage der Extrudatstränge nutzbringend eingesetzt werden, in dem der wärmere Extrudatstrang so dicht an einen bereits vorher abgelegten Extrudatstrang abgelegt werden, dass die weitere Expansion des Kunststoffmaterials eine stoffschlüssige Verbindung der beiden Extrudatstränge zumindest begünstigt. Bevorzugt dringt das noch wärmere Material dabei in das kühlere Material des zuvor abgelegten Extrudatstranges ein oder wird daran angedrückt bzw. angepresst.

Bevorzugt wird als Fördereinrichtung zum Fördern und Durchdrücken der Materialmischung ein Schneckenförderer verwendet. Hierbei ist der Schneckenförderer bevorzugt ein kompaktes und einfach aufgebautes Gerät und insbesondere geeignet neben dem Fördern des Rohmaterials aus dem Vorratsbehälter und der Dosierung während des Durchdrückens der Materialmischung diese wenigstens teilweise zu erwärmen/zu erhitzen. Zweckmäßig erfolgt das Erwärmen der Materialmischung gegebenenfalls bereits im Schneckenförderer durch Knet- und Walkvorgänge der Granulatkörner bzw. der Kunststoffschmelze, wobei das finale Erhitzen auf über Schmelztemperatur des eingesetzten Kunststoffs bevorzugt in einem beheizten Düsenkanal erfolgt, der der Austrittsdüse in Förderrichtung der Materialmischung vorgelagert ist.

Somit kann erreicht werden, dass neben einer Erhitzung der Materialmischung insbesondere durch die Knet- und Walkvorgänge auch ein optimales Mischen/Nachmischen des Kunststoffgranulat mit dem Treibmittel erfolgen kann. Nachdem die Kunststoffgranulatkörner aufgeschmolzen sind, sorgt die Schnecke des Schneckenförderers zudem für eine gleichmäßige Verteilung von Gasen, welche sich durch das zu diesem Zeitpunkt bereits aktivierte Treibmittel im Schmelzebrei befinden.

Bei Bedarf eines besonders schnellen Aufschmelzvorgangs kann das Erhitzen der Materialmischung wenigstens teilweise durch äußere Wärmezufuhr zu dem Schneckenförderer erfolgen. Beispielsweise gelingt dies durch Heizmanschetten oder andere Heizeinrichtungen, welche in der Lage sind, einem Fördererrohr des Schneckenförderers Wärme zuzuführen.

Zweckmäßig erfolgt ein Aufschäumen des Kunststoffmaterials wenigstens überwiegend beim Austritt der geschmolzenen Materialmischung aus der Austrittsdüse. Hierdurch kann ein übermäßiges Expandieren des Treibgases des Treibmittels innerhalb des Förderraums des Schneckenförderers minimiert werden, wodurch vorteilhafterweise im Förderraum des Schneckenförderers ein Überdruck entsteht, welcher das Hindurchtreten der aufgeschmolzenen Materialmischung durch die Austrittsdüse fördert oder zumindest unterstützt.

Aufgrund obiger Funktionsweise kann es zweckmäßig sein, dass ein Überdruck, welcher durch das aktivierte Treibmittel im Inneren des Schneckenförderers und/oder im Düsenkanal erzeugt wird, zum Durchdrücken der Materialmischung durch die Austrittsdüse wenigstens unterstützend genutzt wird.

Für das Verfahren geeignete Kunststoffe sind thermoplastische Kunststoff-Materialien, zum Beispiel thermoplastisches Polyurethan, EVA oder ein anderes thermoplastisches oder thermoelastisches Material, das für die Herstellung von orthopädischen Schuheinlagen zugelassen ist. Die beispielhaft angegebenen Materialien eignen sich aufgrund ihrer (Heilmittel-)Zulassung zur Herstellung von orthopädischen Schuheinlagen.

Es hat sich ferner als praktikabel und nützlich herausgestellt, dass eine Dicke des Extrudatstranges zwischen 1mm und 10mm einstellbar ist. Ein in der Dicke einstellbarer Extrudatstrang, welcher insbesondere durch eine in ihrem Querschnitt variable Düsenöffnung am Ende des Düsenkanals der (beheizbaren) Düse bereitgestellt werden kann, hat sich beispielsweise für die Ausbildung unterschiedlicher Wandstärken des zu druckenden Bauteils als vorteilhaft herausgestellt. So können z.B. durch Anpassung der Dicke des Extrudatstrangs flächigere Bereiche eines Querschnitts des herzustellenden Bauteils mit einem einzigen Überlauf des Druckkopfes hergestellt werden, sodass innerhalb dieser momentan vorhandenen Druckebene nicht mehrfach Extrudatstränge nebeneinander abgelegt werden müssen, um die flächige Gestalt der herzustellenden Schicht zu erreichen. Dabei sind sowohl wechselbare Düsen mit unterschiedlich großen Düsenöffnungen als auch Düsen, deren Öffnungsgröße während des Betriebs in Art einer Iris veränderbar ist, technisch vorstellbar. Jedoch sind auch andere dem Fachmann geläufige Methoden zur Düsenquerschnittsveränderung vom Erfindungsgedanken umfasst.

Ein geringer apparativer Aufwand lässt sich beispielsweise realisieren, wenn das gedruckte Bauteil am Ende des Förderbandes mittels Schwerkraft in einen Auffangbehälter fällt.

Hinsichtlich der eingangs genannten Aufgaben, betreffend ein Bauteil für orthopädische Schuheinlagen, werden diese Aufgaben mit einem Bauteil für eine orthopädische Schuheinlage aus einem aufgeschäumten thermoplastischen Kunststoff-Material, das im erfindungsgemäßen FDM-3D-Druckverfahren hergestellt ist, gelöst, bei dem abgekühlte Extrudatstränge aus aufgeschäumten thermoplastischen Kunststoff-Material bestehen, die nebeneinander, insbesondere mäanderförmig nebeneinander, oder überlappend versetzt zueinander angeordnet sind.

Das erfindungsgemäße Verfahren ermöglicht insbesondere ein Bauteil, bei dem die Dicke der erfindungsgemäßen Extrudatstränge von der vorgegebenen Dicke herkömmlicher Filamente, die im Filament-FDM-3D-Druckverfahren verwendet werden, abweicht.

Hierdurch ist, insbesondere im Zusammenspiel mit der Aufschäumung des verwendeten Kunststoffmaterials eine größere Variabilität hinsichtlich der Breite eines aufzutragenden Extrudatstrangs und somit hinsichtlich der möglichst niedrigen Anzahl der notwendigen hin und her Bewegungen des Druckkopfes innerhalb einer Druckebene gewährleistet.

Vorteilhaft ist bei einem Bauteil gemäß der Erfindung, dass die Anordnung der Extrudatstränge einen Winkel a größer als 0 zur Horizontalen zeigt, wenn das Bauteil in seiner bestimmungsgemäßen Lage ausgerichtet ist.

Der Winkel a der Schrägstellung der Extrudatstränge zur horizontalen ergibt sich aus der oben im Zusammenhang mit dem Verfahren erläuterten Schrägstellung des Förderbandes zur Horizontalen und beträgt insbesondere 30° bis 70°, insbesondere 40° bis 60°. Hierdurch wird erreicht, dass zum Beispiel eine vertikal auf eine orthopädische Schuhsohle einwirkende Gewichtskraft des Trägers der orthopädischen Schuhsohle auf schräg gestellte Extrudatstrang bzw. schräggestellte Schichten aus Extrudatstrang des Bauteils treffen und somit auch bei relativ kleinflächigen Eintrag der Gewichtskräfte eine Vielzahl von Schichten/eine Vielzahl von Extrudatstrang am Tragen der Last beteiligt sind. Es findet somit eine verbesserte Lastverteilung zwischen einzelnen Extrudatsträngen/ Schichten des 3D-gedruckten orthopädischen Bauteils statt.

Hinsichtlich der Aufgaben betreffend die orthopädische Schuheinlage werden diese mit orthopädischen Schuheinlagen gelöst, welche zumindest ein Bauteil gemäß der Erfindung aufweisen, also zumindest ein orthopädisch wirksames Bauteil, das mit dem erfindungsgemäßen Verfahren hergestellt ist.

Im Folgenden wird die Erfindung anhand der Zeichnung beispielhaft näher erläutert. Die einzige Figur zeigt ein Ablaufdiagramm des erfindungsgemäßen Verfahrens mit optional durchzuführbaren Verfahrensschritten, wobei insbesondere die optional durchführbaren Schritte den Erfindungsgedanken nicht einschränken und für den Fachmann äquivalente Ausführungen vom Erfindungsgedanken umfasst sein sollen.

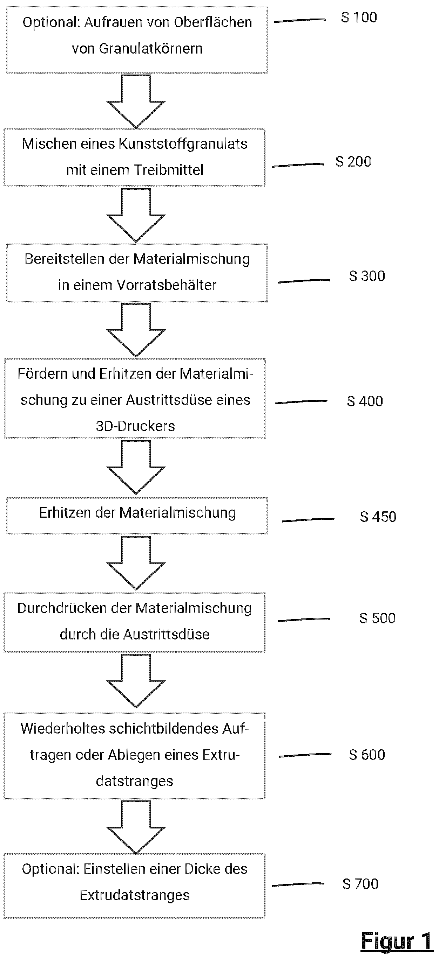

Das erfindungsgemäße Verfahren ist beispielhaft in der Figur 1 dargestellt. Das erfindungsgemäße Verfahren sieht vor, in einem Schritt S 200 die Körner eines Kunststoffgranulat mit einem Treibmittel physikalisch anzulagern, zu beschichten, zu benetzen und/oder zu vermischen. Das Treibmittel besitzt eine Aktivierungstemperatur, ab der aus dem Treibmittel gasförmige Produkte entstehen, die, wenn sie sich in einer Kunststoffschmelze befinden, zu einem Aufschäumen der Kunststoffschmelze führen. Derartige Treibmittel sind als Schaumbildner bekannt. Solche Treibmittel liegen bei Raumtemperatur üblicherweise in Pulverform vor, aber auch flüssige Treibmittel sind bei der Durchführung des erfindungsgemäßen Verfahrens denkbar.

Das Kunststoffgranulat weist eine Vielzahl von Granulatkörnern auf, welche zum Beispiel in Form kleiner zylindrischer Pellets oder als unregelmäßig geformte Körner vorliegen. Üblicherweise ist ein Kunststoffgranulat, zum Beispiel ein thermoplastisches Kunststoffgranulat mit Granulatkörnern in Form kleiner Zylinder mit etwa 3 bis 4 mm Durchmesser und etwa 5 bis 10 mm Länge am Markt verfügbar. Derartige kleine zylindrische Granulatkörner weisen insbesondere im Bereich der Zylinderaußenoberfläche eine relativ glatte Oberfläche auf, welche ein zuverlässiges Anhaften von Treibmittelpulver beim Mischen des Treibmittelpulvers mit dem Granulat gegebenenfalls negativ beeinflusst. Stirnseiten dieser Pellets sind oftmals etwas rauer, sodass Pulverpartikel eines Treibmittelpulvers dort besser anhaften.

In einem optionalen Schritt S 100 wird daher gemäß eines Aspekts der Erfindung vor dem Vermischen des Treibmittels mit dem Kunststoffgranulat ein Aufrauen der Oberflächen der Granulatkörner durchgeführt. Ein solches Aufrauen bewirkt, dass sich Pulverpartikel des Treibmittels besser an die Außenoberfläche der Granulatkörner anlagern können. Somit entsteht eine homogenere Verteilung/Anlagerung des Treibmittels an die Granulatkörner des eingesetzten Kunststoffgranulats beim Mischvorgang. Als Ergebnis des Mischschrittes S 200 liegt somit eine möglichst gleichmäßige Vermischung des Treibmittels und der Granulatkörner vor. Bei Verwendung eines pastösen oder gar klebrigen Treibmittels kann dieser Schritt entfallen, da dann ausreichend Treibmittel zum Schäumen des Kunststoffs nach dem Mischen an den Außenflächen der Granulatkörner anhaftet.

Die so erhaltene Materialmischung wird in einem Schritt S 300 in einem Vorratsbehälter eines 3D-Druckers, insbesondere eines FDM-3D-Druckers bereitgestellt. Ein solcher Vorratsbehälter kann beispielsweise anstelle einer Haspel für Filamente, die üblicherweise mit einem FDM-3-D-Drucker verarbeitet werden, vorgesehen sein. Ein solcher Vorratsbehälter kann außerdem beispielsweise ein trichterförmige Vorratsbehälter sein, dessen untere Trichteröffnung in eine Fördereinrichtung mündet, mittels der gemäß dem Schritt S 400 die Materialmischung aus dem Vorratsbehälter zu einer beheizten Austrittsdüse des FDM-3D-Druckers gefördert wird. Als geeignete Fördereinrichtung kommen beispielsweise ein Schneckenförderer oder andere geeignete, insbesondere kontinuierlich fördernde Fördereinrichtungen infrage. Für kleinkörnige Materialmischungen ist auch vorstellbar, dass bereits die Schwerkraft zur Förderung der Materialmischung zur beheizten Austrittsdüse ausreicht, beispielsweise bei relativ großdimensionierten Vorratsbehältern. Wie oben bereits ausgeführt kann die Schwerkraft aber nur die Förderung durch den Extruder unterstützen, insbesondere wenn ein eingesetzter Schneckenförderer im Wesentlichen vertikal angeordnet ist.

Bevorzugt ist eine beheizte Austrittsdüse für den FDM-3D-Drucker vorgesehen sein, die einen beheizten Düsenkanal aufweist, welcher in der Lage ist, die durch den Düsenkanal hindurchtretende Kunststoffmaterialmischung wenigstens unterstützend zu erhitzen oder eine bereits vorliegende Schmelze der Materialmischung warm zu halten bzw. auf über Schmelztemperatur des thermoplastischen Kunststoff zu erhitzen. Durch eine solche beheizte Austrittsdüse wird in einem Schritt S 500 die Materialmischung bevorzugt mittels der Fördereinrichtung hindurchgedrückt, wobei aus der Materialmischung durch Erhitzen in der Fördereinrichtung und/oder im Bereich des Düsenkanals der Austrittsdüse und ein aufgeschmolzener und aufschäumender, faden- oder bandförmiger Extrudatstrang entsteht.

Damit ein zuverlässiges Aufschäumen innerhalb des Düsenkanals der beheizten Austrittsdüse wenigstens initiiert, bevorzugt aber erfolgt, wird die Austrittsdüse und/oder deren Düsenkanal zum Beispiel derart (unterstützend) erwärmt, dass nicht nur die Aktivierungstemperatur des Treibmittels, sondern auch die Schmelztemperatur des thermoplastischen Kunststoffs der Materialmischung erreicht und überschritten wird. Die Fördereinrichtung, zum Beispiel ein Schneckenförderer, kann bevorzugt einen wesentlichen, insbesondere einen überwiegenden Teil des Wärmeeintrags in die Materialmischung, der zum Aufschäumen der Schmelze und/oder zum Aktivieren des Treibmittels notwendig ist, bereitstellen. Zu diesem Zweck ist es bevorzugt, dass die Aktivierungstemperatur des Treibmittels niedriger ist als die Schmelztemperatur des thermoplastischen Kunststoffmaterials. Hierdurch kann sichergestellt werden, dass bei einem Aufschmelzen des thermoplastischen Kunststoffmaterials in jedem Fall auch die Aktivierungstemperatur des Treibmittels erreicht ist und so zuverlässig ein Aufschäumen der Materialmischung spätestens am Düsenausgang stattfinden kann.

In einem weiteren Schritt S 600 findet beim erfindungsgemäßen Verfahren ein wiederholtes, schichtbildendes Auftragen oder Ablegen des Extrudatstranges in Schwerkraftrichtung auf ein getaktet angetriebenes Förderband statt. Alternativ kann dies auch auf einen bereits in einem vorherigen Durchgang aufgetragenen Extrudatstrang, diesen in Schwerkraftrichtung gesehen wenigstens teilweise überlappend, erfolgen. Nach dem Auftragen einer Schicht wird das Förderband, insbesondere ein endlose Förderband um einen Schritt weiter getaktet, sodass die nächste Schicht aufgetragen werden kann. Hierzu ist es zweckmäßig, das getaktet angetriebene Förderband zur Horizontalen geneigt anzuordnen, damit bei einer getakteten Weiterbewegung des Förderbandes zum Zwecke der Bildung der nächsten Schicht auch eine Bewegung in Z-Richtung (=Hochrichtung = Schwerkraftrichtung) relativ zum Druckkopf erfolgt und so Platz für die nächste Schicht gebildet ist. Mit einer solchen Anordnung wird einerseits erreicht, dass eine nachfolgende Schicht auf der darunterliegenden Schicht bzw. ein Extrudatstrang einer nachfolgenden Schicht auf einen Extrudatstrang der darunterliegenden Schicht zu liegen kommt, und andererseits auch wenigstens in einem Teilbereich jede Schicht, die mit dem Förderband in Kontakt steht, eine Anhaftung erfährt. Der Druckkopf selbst muss hierbei im einfachsten Fall lediglich eine zweidimensionale Bewegung in einer X-Y Richtung durchführen. Als geeignete Anstellwinkel für das Förderband zur Horizontalen hat sich ein Bereich von 30° bis 70°, insbesondere ein Bereich von 40° bis 60° bewährt. Ein Anstellwinkel von 45° zur Horizontalen ist dabei beispielsweise bevorzugt.

In einem optionalen Schritt S 700 kann während des 3D-Druckvorganges die Dicke des Extrudatstranges, welche beispielsweise in einem Bereich zwischen 1 mm und 10 mm liegen kann, variiert werden. Abweichende Dicken sind dabei ebenfalls vorstellbar, sodass der zuvor genannte Dickenbereich rein beispielhafter Natur ist und derzeitig angewendeten Dickenbereichen entspricht. Der Fachmann erkennt hier, dass die Werteangaben den Erfindungsgedanken nicht einschränken und nicht nur theoretisch auch dünnere oder dickere Extrudatstränge zur Anwendung kommen können.

Die Variation der Dicke der Extrudatstränge gelingt zum Beispiel durch die Verwendung einer Irisblende, die in ihrer Düsen-/Blenden-Austrittsöffnung variabel einstellbar ist. Dabei kann die Irisblende, wie auch jede andere feste Blende in oder nach der Austrittsdüse angeordnet sein. Mit dieser Maßnahme der Verwendung einer solchen verstellbaren Blende können beispielsweise in etwas verdickten Bereichen des herzustellenden Bauteils mit höherer Wandstärke anstelle mehrerer dünner Extrudatstränge nebeneinander zu legen die Anzahl der hin und her Bewegungen des Druckkopfes durch die Ablage eines verdickten dickeren Extrudatstranges aus aufgeschäumtem Material minimiert werden. Gegebenenfalls gelingt es, je nach Schichtdicke des herzustellenden Bauteils eine dickwandigere Sektion mit nur jeweils einem Strang größerer Dicke pro Druckebene zu realisieren. Dies verringert die Zeit und erhöht die Wirtschaftlichkeit des Druckvorganges und ist insbesondere bei dem erfindungsgemäß verwendetem aufgeschäumten Kunststoffmaterial relativ leicht zu realisieren.

Somit können mit dem erfindungsgemäßen Verfahren bei Einsatz einer Blende mit variabel einstellbaren Blendenquerschnitt orthopädisch wirksame Bauteile hergestellt werden, die durch Extrudatstränge mit verschiedenen Dicken aufgebaut sind. So können beispielsweise flächige Bereiche Extrudatstränge mit größerem Durchmesser gefertigt werden und Bereiche, in denen es auf eine gute Maßhaltigkeit in der Nachbildung der 3-D-Ausgangsdaten ankommt, mit Extrudatsträngen gefertigt werden, die einen kleineren Durchmesser zeigen.

## Patentansprüche

1. Verfahren zum Herstellen eines Bauteils für eine orthopädische Schuheinlage aus einem aufgeschäumten thermoplastischen Kunststoff-Material mittels FDM-3D-Druckverfahren, aufweisend die Schritte:
- physikalisches Mischen (S 200) eines Granulates aufweisend Granulatkörner eines thermoplastischen Kunststoff-Materials mit einem Treibmittel zum Erzeugen einer Materialmischung;
- Bereitstellen (S 300) der Materialmischung in einem insbesondere trichterförmigen Vorratsbehälter eines FDM-3D-Druckers;
- Fördern (S 400) der Materialmischung aus dem Vorratsbehälter zu einer Austrittsdüse des FDM-3D-Druckers mittels einer Fördereinrichtung;
- Erhitzen (S 450) der Materialmischung bis über eine Schmelztemperatur des Kunststoffmaterials;
- Durchdrücken (S 500) der Materialmischung durch die Austrittsdüse zum Erzeugen eines aus der Materialmischung entstehenden aufgeschmolzenen und aufgeschäumten, faden- oder bandförmigen Extrudatstranges;
- wiederholtes schichtbildendes Auftragen oder Ablegen (S 600) des Extrudatstranges in Schwerkraftrichtung mittels einer Materialauftragvorrichtung auf ein getaktet angetriebenes Endlosförderband, und/oder auf einen bereits auf dem Endlosförderband aufgetragenen Extrudatstrang, diesen in Schwerkraftrichtung gesehen wenigstens teilweise überlappend.

2. Verfahren nach Anspruch 1, bei dem Oberflächen der Granulatkörner des thermoplastischen Kunststoff-Materials mechanisch aufgeraut werden (S 100), bevor diese mit dem Treibmittel vermischt werden.

3. Verfahren nach Anspruch 1 oder 2, bei dem das Endlosförderband gegenüber der Horizontalen geneigt ist.

4. Verfahren nach einem der vorherigen Ansprüche, bei dem eine Aktivierungstemperatur des Treibmittels geringer ist als die Schmelztemperatur des thermoplastischen Kunststoff-Materials, sodass das geschmolzene Kunststoff-Material beim Austritt aus der Austrittsdüse durch das aktivierte, gasförmige Treibmittel aufgeschäumt wird.

5. Verfahren nach einem der vorherigen Ansprüche, wobei die Fördereinrichtung die Materialmischung im Wesentlichen senkrecht von oben nach unten vom Vorratsbehälter zur Austrittsdüse fördert.

6. Verfahren nach einem der vorherigen Ansprüche, wobei die Fördereinrichtung zum Fördern (S 400) und zum Durchdrücken (S 500) der Materialmischung durch die Austrittsdüse einen Schneckenförderer aufweist.

7. Verfahren nach einem der vorherigen Ansprüche, wobei das Erhitzen (S 450) der Materialmischung wenigstens teilweise durch äußere Wärmezufuhr zu dem Schneckenförderer und/oder in einem beheizten Düsenkanal, der der Austrittsdüse in Förderrichtung der Materialmischung vorgelagert ist, erfolgt.

8. Verfahren nach einem der vorherigen Ansprüche, wobei ein Überdruck, welcher durch das aktivierte Treibmittel im Inneren des Schneckenförderers und/oder des Düsenkanals erzeugt wird, zum Durchdrücken (S 500) der Materialmischung durch die Austrittsdüse wenigstens unterstützend genutzt wird.

9. Verfahren nach einem der vorherigen Ansprüche, bei dem das thermoplastische Kunststoff-Material ein thermoplastisches Polyurethan, ein EVA oder ein anderes thermoplastisches oder thermoelastisches Material ist, das für die Herstellung von orthopädischen Schuheinlagen zugelassen ist.

10. Verfahren nach einem der vorherigen Ansprüche, bei dem eine Dicke des Extrudatstranges zwischen 1 mm und 10 mm einstellbar ist (S 700).

11. Verfahren nach einem der vorherigen Ansprüche, bei dem das Bauteil am Ende des Förderbandes mittels Schwerkraft in einen Auffangbehälter fällt.

12. Orthopädisch wirksames Bauteil für eine orthopädische Schuheinlage aus einem aufgeschäumten thermoplastischen oder thermoelastischen Kunststoff-Material, das im FDM-3D-Druckverfahren hergestellt ist, bei dem abgekühlte Extrudatstränge, die das Bauteil ausbilden, aus aufgeschäumten thermoplastischen oder thermoelastischen Kunststoff-Material bestehen, die insbesondere nebeneinander oder überlappend versetzt zueinander angeordnet und miteinander stoffschlüssig verbunden sind.

13. Bauteil nach Anspruch 12, bei dem die Dicke der Extrudatstränge von der Dicke herkömmlicher Filamente, die im Filament-FDM-3D-Druckverfahren verwendet werden, abweicht und/oder die Extrudatstränge aus denen das Bauteil aufgebaut ist, unterschiedliche Dicken besitzen.

14. Bauteil nach Anspruch 12 oder 13, bei dem die Anordnung der Extrudatstränge einen Winkel a größer als 0 zur Horizontalen zeigt, wenn das Bauteil in seiner bestimmungsgemäßen Lage ausgerichtet ist.

15. Orthopädische Schuheinlage mit einem Bauteil nach einem der Ansprüche 12 bis 14.

16. Kunststoffmaterial-Mischung zugelassen zum Herstellen von orthopädisch wirksamen Bauteilen für orthopädische Schuheinlagen, welches ein Kunststoffmaterial in Form von Granulatkörnern und ein Treibmittel zum Aufschäumen des Kunststoffmaterials aufweist, das an den Außenflächen der Kunststoff-Granulatkörner anhaftet.

17. Kunststoffmaterial-Mischung nach Anspruch 16, bei dem die Außenflächen der Granulatkörner aufgeraut sind, um ein besseres Anhaften des Treibmittels zu bewirken.

18. Kunststoffmaterial-Mischung nach Anspruch 16, bei dem das Treibmittel im pastösen oder flüssigen Zustand auf die Granulatkörner aufgebracht wurde.

19. Kunststoffmaterial-Mischung nach Anspruch 16, bei dem das Treibmittel zumindest teilweise durch elektrostatische Anziehung an den Granulatkörner anhaftet.
